# EUROPEAN PATENT APPLICATION

(11) **EP 3 190 340 A1**
(43) Date of publication of application: **12.07.2017**
(21) Application number: 16205854.9
(22) Date of filing: 21.12.2016
(51) Int. Cl.: F23R 3/10, F23R 3/06, F23R 3/00

(54) **COOLED COMBUSTOR FOR A GAS TURBINE ENGINE**

(30) Priority: 05.01.2016 US 201614988068
(71) Applicant: General Electric Company, Schenectady, NY 12345 (US)
(72) Inventor: BENNETT, William Thomas, Cincinnati, OH Ohio 45215 (US)
(74) Representative: Williams, Andrew Richard

(57) **Abstract**

A combustor 30 for a gas turbine engine 10 comprises a liner 76 having a forward opening 140 and an aft opening 142. A deflector 122 closes the forward opening 140 and the aft opening 142 is in fluid communication with a turbine section 32 downstream of the combustor 30. A dome 92 disposed in the deflector 122 provides a fuel/air mixture to be ignited to drive the turbine section 32. A gap 174 can be disposed between the deflector 122 and the liner 76, having film holes 160 disposed in the deflector 122 for providing a flow of cool air to the gap 174 for cooling the combustion liner 76 downstream of the gap 174.

## Description

Gas turbine engines are rotary engines that extract energy from a flow of combusted gases passing through the engine onto a multitude of rotating turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Gas turbine engines for aircraft are designed to operate at high temperatures to maximize engine efficiency, so cooling of certain engine components, such as the high pressure turbine and the low pressure turbine, can be beneficial. Typically, cooling is accomplished by ducting cooler air from the high and/or low pressure compressors to the engine components that require cooling. Temperatures in the high pressure turbine are around 1000 °C to 2000 °C and the cooling air from the compressor is around 500 °C to 700 °C. While the compressor air is a high temperature, it is cooler relative to the turbine air, and can be used to cool the turbine.

Contemporary combustors have liners to define the combustion chamber for burning fuel upstream from the turbine. The liners can be cooled with a flow of cooling air from a combination of nugget hole cooling and or arrays of film holes. However, arrays of film holes alone can fail to properly cool the liner and nugget cooling involves heightened cost and is prone to failure.

Accordingly, a method of cooling a combustor for a gas turbine engine comprising supplying an impinging airflow onto a deflector of the combustor and after impingement onto the deflector, supplying the impinging airflow through film holes in the combustor to define a film of cooling air along at least a portion of the liner is provided.

A combustor for a gas turbine engine comprising a liner defining a forward opening and an aft opening, a deflector closing the forward opening, a dome located in the deflector, and film holes extending through the combustor deflector to an interior of the liner is also provided.

A combustor for a gas turbine engine comprising a deflector, a liner spaced from the deflector and defining a gap therebetween, and at least one film holes extending through the deflector and having an outlet opening into the gap is provided.

In the drawings:
FIG. 1 is a schematic cross-sectional diagram of a gas turbine engine for an aircraft.
FIG. 2 is a schematic cross-sectional view of the combustor section transitioning into a turbine section of the engine of FIG. 1.
FIG. 3 is a perspective view of the combustor of FIG. 2.
FIG. 4 is an exploded view of the combustor of FIG. 3.
FIG. 5 is a cross-sectional view of the deflector section of the combustor of FIG. 4.
FIG. 6 is the cross-sectional view of the deflector section of FIG. 5 illustrating fluid flow paths.

The described embodiments of the present invention are directed to a turbine combustor, and in particular to cooling a combustion liner. For purposes of illustration, the present invention will be described with respect to a combustor for an aircraft gas turbine engine. It will be understood, however, that the invention is not so limited and can have general applicability in non-aircraft applications, such as other mobile applications and non-mobile industrial, commercial, and residential applications.

As used herein, the terms "axial" or "axially" refer to a dimension along a longitudinal axis of an engine. The term "forward" or "upstream" used in conjunction with "axial" or "axially" refers to moving in a direction toward the engine inlet, or a component being relatively closer to the engine inlet as compared to another component. The term "aft" or "downstream" used in conjunction with "axial" or "axially" refers to a direction toward the rear or outlet of the engine relative to the engine centerline.

As used herein, the terms "radial" or "radially" refer to a dimension extending between a center longitudinal axis of the engine and an outer engine circumference. The use of the terms "proximal" or "proximally," either by themselves or in conjunction with the terms "radial" or "radially," refers to moving in a direction toward the center longitudinal axis, or a component being relatively closer to the center longitudinal axis as compared to another component. The use of the terms "distal" or "distally," either by themselves or in conjunction with the terms "radial" or "radially," refers to moving in a direction toward the outer engine circumference, or a component being relatively closer to the outer engine circumference as compared to another component.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding, and do not create limitations, particularly as to the position, orientation, or use. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order and relative sizes reflected in the drawings attached hereto can vary.

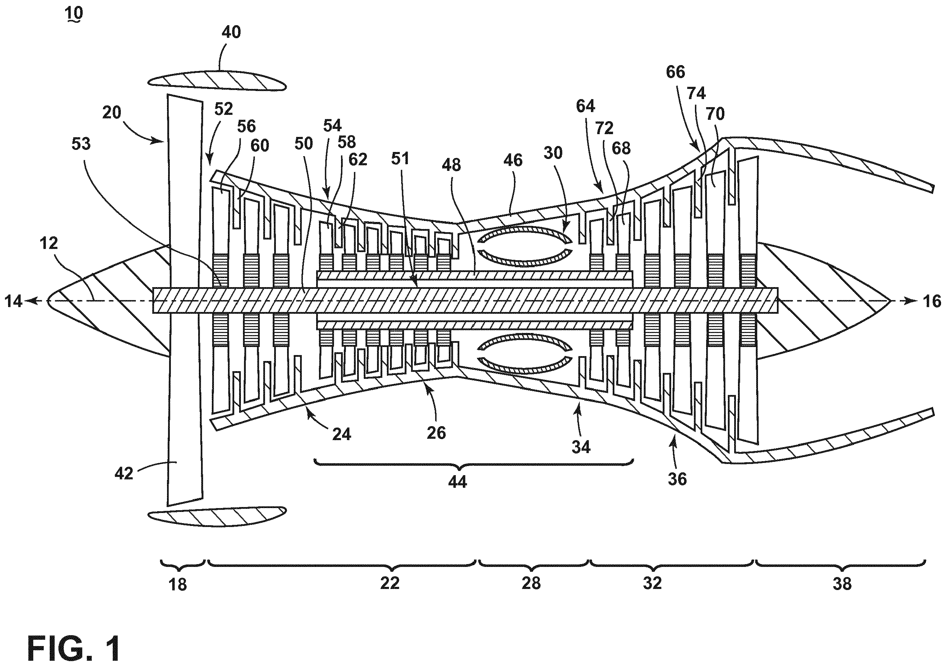

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20. The portions of the engine 10 mounted to and rotating with either or both of the spools 48, 50 are also referred to individually or collectively as a rotor 51.

The LP compressor 24 and the HP compressor 26 respectively include a plurality of compressor stages 52, 54, in which a set of compressor blades 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible. The blades 56, 58 for a stage of the compressor can be mounted to a disk 53, which is mounted to the corresponding one of the HP and LP spools 48, 50, with each stage having its own disk. The vanes 60, 62 are mounted to the core casing 46 in a circumferential arrangement about the rotor 51.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies air to the LP compressor 24, which then supplies pressurized air to the HP compressor 26, which further pressurizes the air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26.

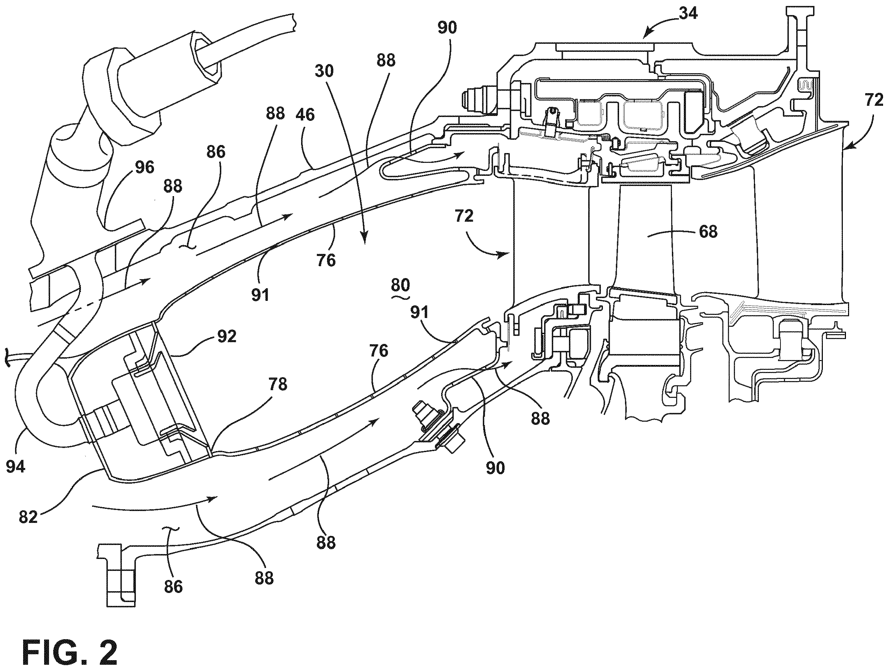

FIG. 2 is a side section view of the combustor 30 of the engine 10 of FIG. 1. The combustor 30 includes a combustion liner 76 and a deflector assembly 78 to define a combustion chamber 80. The deflector assembly 78 comprises a plurality of annularly arranged dome 92 for introducing a fuel/air mixture into the combustion chamber 80.

A bypass channel 86 can be disposed both radially inside of and outside of the combustion chamber 80. The bypass channels 86 provide a flow of fluid 88 from the compressor section 26 to the turbine section 34 bypassing the combustor 30 through a set of openings 90. Additionally, the bypass channels 86 can provide a flow of cooling fluid to the combustion chamber 80 through a plurality of film holes 91 for providing surface film cooling along the interior surface of the combustion liner 76 relative to the combustion chamber 80.

The dome 92 can be coupled to a fuel line 94 mounted to the combustor 30 at a mount 96 and fed with a flow of fuel from the fuel line 94 for emitting and igniting a fuel/air mixture into the combustion chamber 80. The fuel line 94 is inserted through a cowl 82, which can mount the dome 92 and forward section of the combustor 30 to the core casing 46.

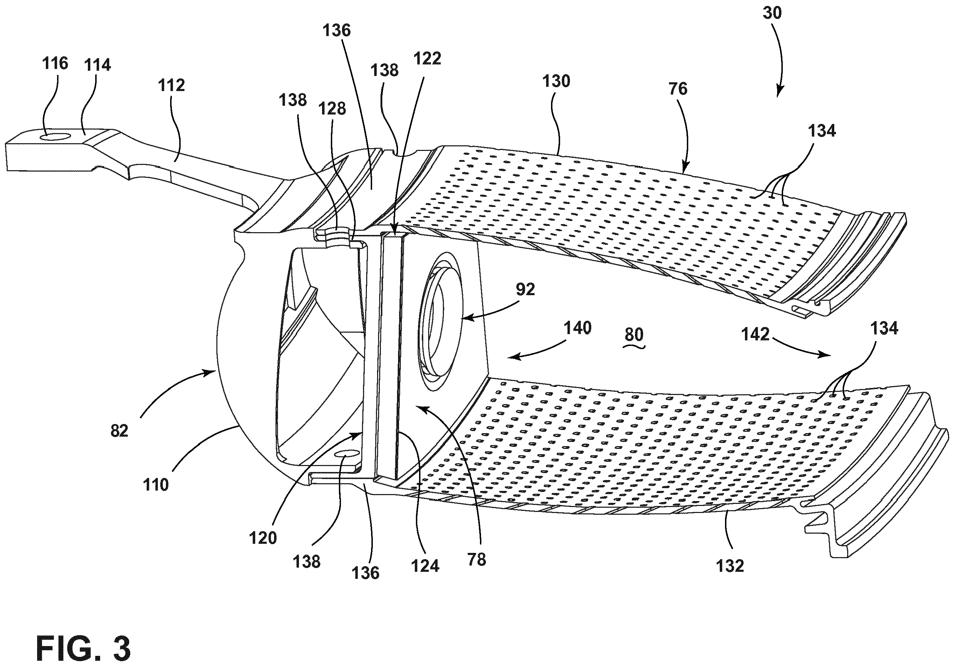

Turning to FIG. 3, a perspective view of the combustor 30 illustrates the cowl 82 having a body 110. An arm 112 extends from the body 110, terminating at a mount 114 having an aperture 116 for mounting the combustor 30 to the core casing with a fastener, such as a bolt. The cowl 82 couples to an impingement baffle 120. The impingement baffle 120 couples to a deflector 122, having a deflector surface 124 defining the surface of the deflector assembly 78 confronting the combustion chamber 80. The deflector surface 124 can be made of a material suitable for use in high temperature regions typical in a combustor 30. The deflector 122 comprises two extensions 128 adapted to receive the body 110 of the cowl 82.

The combustion liner 76 comprises a radially outer liner 132 and a radially inner liner 130, each liner 130, 132 having a plurality of film holes 134 to provide surface cooling along the interior of the liner 76 confronting the combustion chamber 80. The combustion liner 76 can define a forward opening 140 and an aft opening 142, having the deflector 122 closing the forward opening 140. The radially outer and inner liners 130, 132 comprise forward extensions 136, extending over the impingement baffle extensions 128. The combination of the body 110, the baffle extensions 128, and the liner extensions 136 overlay one another, each comprising one or more fastener apertures 138 for coupling the cowl 82, impingement baffle 120, and the liners 130, 132.

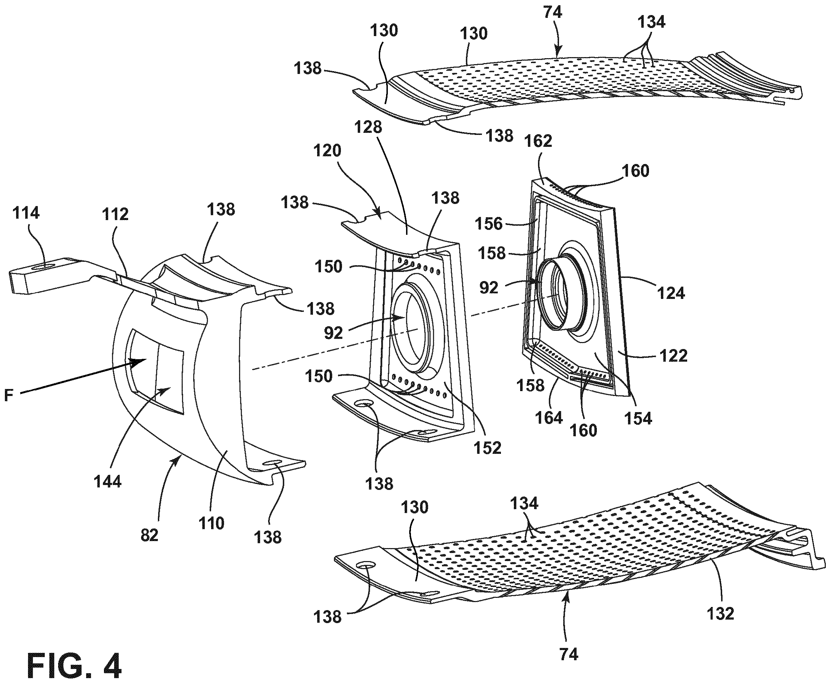

Looking at FIG. 4, an exploded view best illustrates a plurality of apertures as impingement holes 150 disposed in the impingement baffle 120 and film holes 160 in the deflector 122. The cowl 82 further comprises an opening 144. The opening 144 receives the insertion of the fuel line 94 as well as provides space for a flow of fluid F to be provided into the interior of the cowl 82. The impingement baffle 120 comprises a plurality of impingement holes 150 arranged along an impingement wall 152. The impingement holes 150 are arranged in two rows being disposed radially above and below the dome 92. The arrangement of the impingement holes 150 is exemplary and should not be construed as limiting. The impingement holes 150 can be alternatively arranged around the dome 92, spaced, staggered, offset, or any other arrangement.

The deflector 122 comprises a deflector wall 154 transitioning to sidewalls 156 on the sides of the deflector 122. One or more fillets 158 can provide a transition between the deflector wall 154 and the sidewalls 156. A plurality of film holes 160 are disposed in the fillets 158 extending to a radially outer surface 162 and a radially inner surface 164 of the deflector 122. While the film holes 160 are illustrated as disposed in the fillets 158, it is also contemplated that the deflector 122 does not comprise fillets 158 and the film holes 160 extend through the sidewalls 156 to the outer surface 162 and the inner surface 164 of the deflector 122. Thus, the film holes 160 can extend substantially radially relative to the engine centerline to the radially inner and outer surfaces 162, 164 of the deflector 122. Furthermore, the film holes can be any shape, comprising circular, oval, elliptical, quadrilateral, or otherwise.

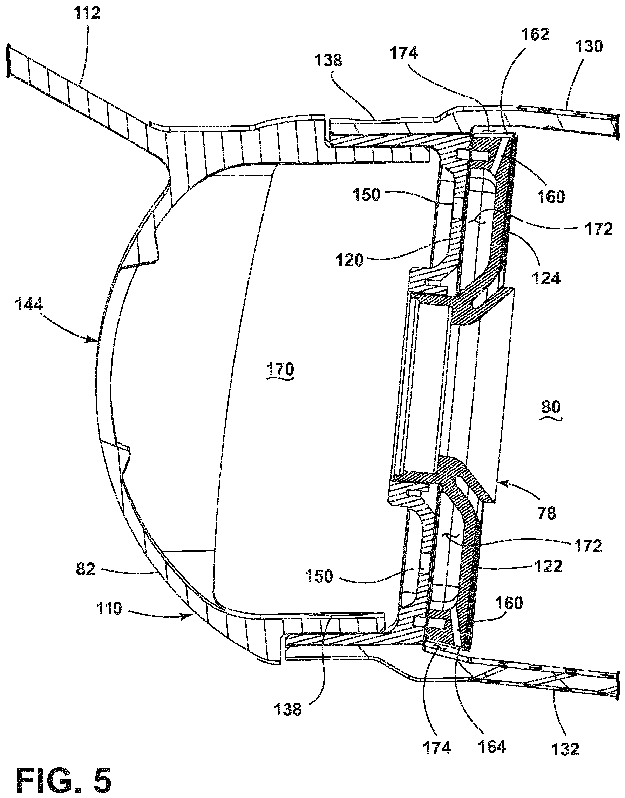

Looking now at FIG. 5, a section view of the coupled cowl 82, impingement baffle 120, deflector 122, and liners 130, 132 best illustrates a plurality of internal chambers. A housing chamber 170 can be defined within the cowl 82 and forward of the impingement baffle 120. A set of impingement chambers 172 are defined between the impingement baffle 120 and the deflector 122 and are in fluid communication with the housing chamber 170 through the impingement holes 150. A set of gaps 174 are defined between the outer surface 162 and the outer liner 132 and between the inner surface 164 and the inner liner 130. The gaps 174 are in fluid communication with the impingement chambers 172 through the film holes 160, with the film holes 160 having inlets adjacent the impingement chamber 172 and outlets at the gap 174. The gaps 174 are further in fluid communication with the combustion chamber 80 downstream of the impingement baffle 120 and the deflector 122. The gaps 174 can be annular, extending circumferentially around the engine centerline 12 with the combustor 30. In one alternative example, the film holes 160 can pass through both the deflector 122 and the liners 130, 132.

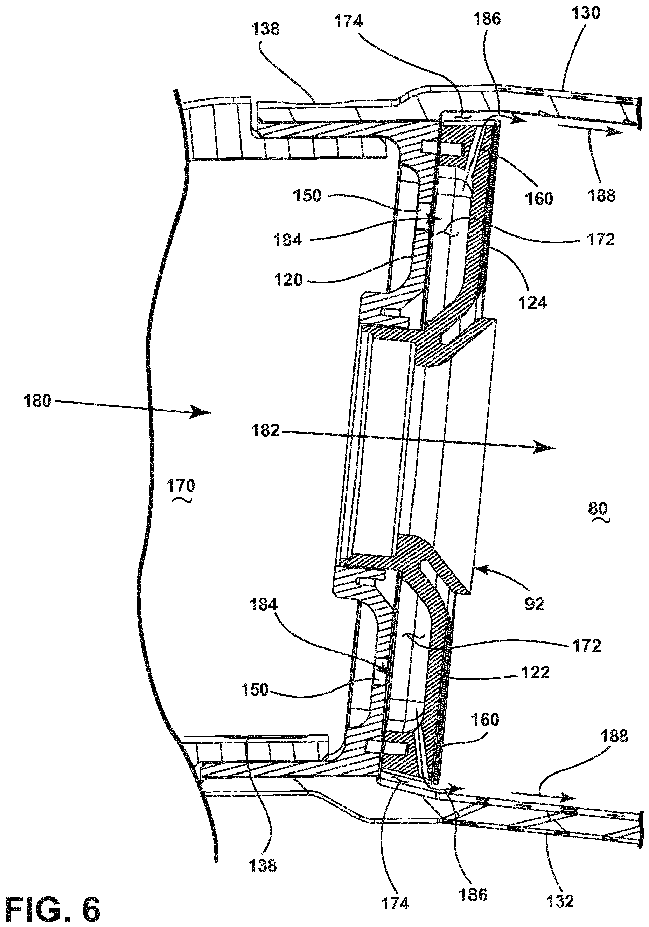

Turning now to FIG. 6, an airflow at 180 can be provided to the housing chamber 170 through the opening 144 from the compressor section upstream of the combustor. At 182, the airflow within the housing chamber 170 can be provided to the impingement baffle 120. The airflow at 184 passes through the impingement holes 150 into the impingement chamber 172 where it can impinge on the deflector 122 to cool the deflector 122. From the impingement chamber 172, at 186 the airflow is provided through the film holes 160 to the gap 174 where the airflow can pass over the internal surface of the combustion liner 76 as a cooling film 188. Thus, a flow of cooling fluid is provided through the deflector assembly 78 to form a cooling film over the internal surface of the combustion liner 76 at the deflector 122, providing a stronger initial cooling film adjacent to the deflector assembly 78. In an alternative example where the film holes 160 pass through both the deflector 122 and the liner 130, 132, the cooling film 188 can be provided to the exterior of the liner 130, 132 relative to the combustion chamber 80.

A method for cooling the combustor 30 of the gas turbine engine 10 can comprise supplying an impinging airflow onto a deflector 122 of the combustor 30 and after impingement onto the deflector 122, supplying the impinging airflow through the film holes 134 in the combustor 30 to define a film of cooling air along at least a portion of the liner 76. The airflow can be supplied from the housing chamber 170 through the impingement holes 150 as an impinging airflow to the deflector 122 within the impingement chamber 172. From the impingement chamber 172, the impinging airflow is fed through the film holes 160 to the gap 174 where the airflow can be directed along a portion of the liner 76 as a cooling film. The airflow being supplied can comprise compressor air from the compressor section 22 of the engine 10. The airflow provided along the liner 76 can be fed along the interior of the liner relative to the combustion chamber 80 defined by the liner 76.

It should be appreciated the improved film cooling can be achieved by directing a flow of air along the combustion liner from a gap in the deflector and the liner. Directing the airflow to the deflector can further cool the deflectors and utilize spent impingement air to further cool the liner. The improved cooling film can reduce or eliminate the need for film nuggets on the liner, which have a tendency to fail or reduce time-on-wing for the combustor or combustion liner.

This written description uses examples to disclose the invention, including the preferred mode, and to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method of cooling a combustor for a gas turbine engine, the method comprising:
   supplying an impinging airflow onto a deflector of the combustor; and
   after impingement onto the deflector, supplying the impinging airflow through film holes in the combustor to define a film of cooling air along at least a portion of a liner.
2. The method of clause 1, wherein the supplying an impinging airflow comprises supplying cooling air through an impingement baffle spaced from the deflector.
3. The method of any preceding clause, wherein the supplying an impinging airflow comprises supplying compressor air from a compressor section of the gas turbine engine.
4. The method of any preceding clause, wherein supplying the impinging airflow through the film holes comprises supplying impinging airflow through film holes passing through at least one of the deflector and liner.
5. The method of any preceding clause, wherein the film holes pass through both the deflector and liner.
6. The method of any preceding clause, wherein the film of cooling air flows along an interior of the liner.
7. A combustor for a gas turbine engine comprising:
   a liner defining a forward opening and an aft opening;
   a deflector closing the forward opening;
   a dome located in the deflector; and
   film holes extending through the combustor from the deflector to an interior of the liner.
8. The combustor of any preceding clause, wherein the film holes extend through at least one of the deflector and the liner.
9. The combustor of any preceding clause, wherein the film holes extend through both the deflector and liner.
10. The combustor of any preceding clause, further comprising an impingement baffle upstream of the deflector.
11. The combustor of any preceding clause, wherein the impingement baffle and deflector at least partially define an impingement chamber and the film holes are fluidly coupled to the impingement chamber.
12. The combustor of any preceding clause, wherein the deflector terminates prior to the liner to define a gap and the film holes are fluidly coupled to the gap.
13. The combustor of any preceding clause, further comprising an impingement baffle upstream of the deflector.
14. The combustor of any preceding clause, wherein the impingement baffle and deflector at least partially define an impingement chamber and the film holes are fluidly coupled to the impingement chamber.
15. The combustor of any preceding clause, wherein the deflector terminates prior to the liner to define a gap and the film holes are fluidly coupled to the gap.
16. A combustor for a gas turbine engine comprising a deflector, a liner spaced from the deflector and defining a gap there between, and at least one film hole extending through the deflector and having an outlet opening into the gap.
17. The combustor of any preceding clause, further comprising an impingement baffle upstream of the deflector.
18. The combustor of any preceding clause, wherein the impingement baffle and deflector at least partially define an impingement chamber and the at least one film hole has an inlet fluidly coupled to the impingement chamber.
19. The combustor of any preceding clause, wherein the at least one film hole extends through at least one of the deflector and the liner.
20. The combustor of any preceding clause, wherein the at least one film hole extend primarily radially through the deflector.

## Claims

1. A combustor (30) for a gas turbine engine (10) comprising:
a liner (76) defining a forward opening (140) and an aft opening (142);
a deflector (122) closing the forward opening (140);
a dome (92) located in the deflector (122); and
film holes (160) extending through the combustor (30) from the deflector (122) to an interior of the liner (76).

2. The combustor (30) of claim 1, wherein the film holes (160) extend through at least one of the deflector (122) and the liner (76).

3. The combustor (30) of any preceding claim, wherein the film holes (160) extend through both the deflector (122) and liner (76).

4. The combustor (30) of any preceding claim, further comprising an impingement baffle (120) upstream of the deflector.

5. The combustor of claim 4, wherein the impingement baffle (120) and deflector (122) at least partially define an impingement chamber (172) and the film holes (160) are fluidly coupled to the impingement chamber (172).

6. The combustor (30) of claim 5, wherein the deflector (122) terminates prior to the liner (76) to define a gap (174) and the film holes (160) are fluidly coupled to the gap (174).

7. The combustor (30) of any preceding claim, further comprising an impingement baffle (120) upstream of the deflector (122).

8. The combustor (30) of claim 7, wherein the impingement baffle (120) and deflector (122) at least partially define an impingement chamber (172) and the film holes (160) are fluidly coupled to the impingement chamber (172).

9. The combustor (30) of any preceding claim, wherein the deflector (122) terminates prior to the liner (76) to define a gap (174) and the film holes (160) are fluidly coupled to the gap (174).

10. The combustor (30) of any preceding claim, wherein the film holes (160) extend substantially radially through the deflector (122) relative to an engine centerline (12).
